# EUROPÄISCHE PATENTANMELDUNG

(11) **EP 0 606 825 A1**
(43) Veröffentlichungstag der Anmeldung: **20.07.1994**
(21) Anmeldenummer: 93810919.6
(22) Anmeldetag: 31.12.1993
(51) Int. Cl.: A47G 23/08, A47J 37/12

(54) **Tischgerät**

(30) Priorität: 12.01.1993 CH 73/93
(71) Anmelder: ROBERT KELLER AG, 8436 Rekingen (CH)
(72) Erfinder: Keller, Robert, CH-8487 Zurzach (CH)
(74) Vertreter: Bosshard, Ernst

(57) **Zusammenfassung**

Das Tischgerät (10) enthält eine auf einen Tisch od.dgl. stellbare Sockelscheibe (20) und eine auf diesem drehbar geführte Drehscheibe (30) zur Aufnahme von Schalen (40). Die Drehscheibe (30) ist mit einer zentralen Oeffnung (31) versehen, unterhalb der sich ein Brenner (15) befindet. Ein Träger (17) in Form eines dünnwandigen, durchbrochenen Metallringes sitzt auf dem zentralen Teil der Sockelscheibe (20) und umgibt den Brenner. An der Unterseite der Drehscheibe (30) sind drei im Abstand von je 120° drehbar befestigte Rollen (32) vorgesehen, welche in einer in der Sockelscheibe (20) versehenen Laufrille (32) geführt sind. Die Drehachsen (33) der Rollen (32, 44) erstrecken sich dabei radial zur Drehscheibe. Dieses Tischgerät (10) ist besonders einfach herstellbar, bedienerfreundlich und befriedigt ästhetische Anforderungen.

## Beschreibung

Die Erfindung bezieht sich auf ein Tischgerät zur Halterung eines oberhalb eines Brenners angeordneten Kochgeschirrs und einer Mehrzahl von Schalen zur Aufnahme von Lebens- oder Genussmitteln.

Solche Tischgeräte finden vorwiegend Anwendung bei der Zubereitung und beim Verspeisen von "Fondue Bourguignon" oder "Fondue Chinoise". Mehrere um einen Tisch sitzende Personen tauchen dabei Fleisch-, Fisch- oder Gemüsestücke, die auf eine Gabel gesteckt werden, in ein mit heissem Oel oder Fleischbrühe gefülltes Kochgeschirr ein. In kleinen Schalen werden verschiedene Saucen oder Gewürze angerichtet, aus denen sich die Teilnehmer wahlweise bedienen können. Die Teilnehmer an einem solchen Essen sollen bequem Zugang zu den Schalen mit den unterschiedlichen Saucen od.dgl. haben. Wenn sich die Schalen auf einem drehbaren Gebilde befinden, besteht ein Problem darin, dass der Brenner und das Kochgeschirr in der Mitte stationär bleiben sollen, damit die in das Kochgeschirr eingetauchten Gabeln während der Garzeit der Fleischstücke od.dgl. nicht mitdrehen.

Die Aufgabe der vorliegenden Erfindung besteht in der Schaffung eines besonders einfach herstellbaren Tischgerätes mit einem leichtgängig verdrehbaren Tragorgan zur Abstützung der die Saucen od.dgl. enthaltenden Schalen.

Die Erfindung, mit der diese Aufgabe gelöst wird, ist dadurch gekennzeichnet, dass eine erste Sockelscheibe zur zentralen Aufnahme des Brenners und eines Trägers zur Abstützung eines Kochgeschirrs vorhanden ist, eine zweite, sich darüber befindliche Drehscheibe mit einer zentralen Oeffnung vorhanden ist mit einer Mehrzahl kranzartig angeordneten runden Oeffnungen zur Aufnahme der Schalen, die Drehscheibe zur Sockelscheibe einen vertikalen Abstand hat und relativ zu dieser verdrehbar ist, zwischen der Sockelscheibe und der Drehscheibe in einem radialen Abstand von der Drehachse mindestens drei Rollen oder Kugeln vorhanden sind zur Abstützung und Zentrierung der Drehscheibe relativ zur Sockelscheibe.

Die Sockel- und Drehscheibe sind in der Herstellung besonders einfach und ergeben einen in Vertikalrichtung kompakten Aufbau. Die Schwierigkeit, bei der leichtgängig zu verdrehenden Drehscheibe ohne zentrale Drehstütze auszukommen, wird durch die vom Zentrum radial distanzierten Rollen oder Kugeln gelöst.

In der Zeichnung sind Ausführungsbeispiele des Erfindungsgegenstandes dargestellt. Es zeigen:

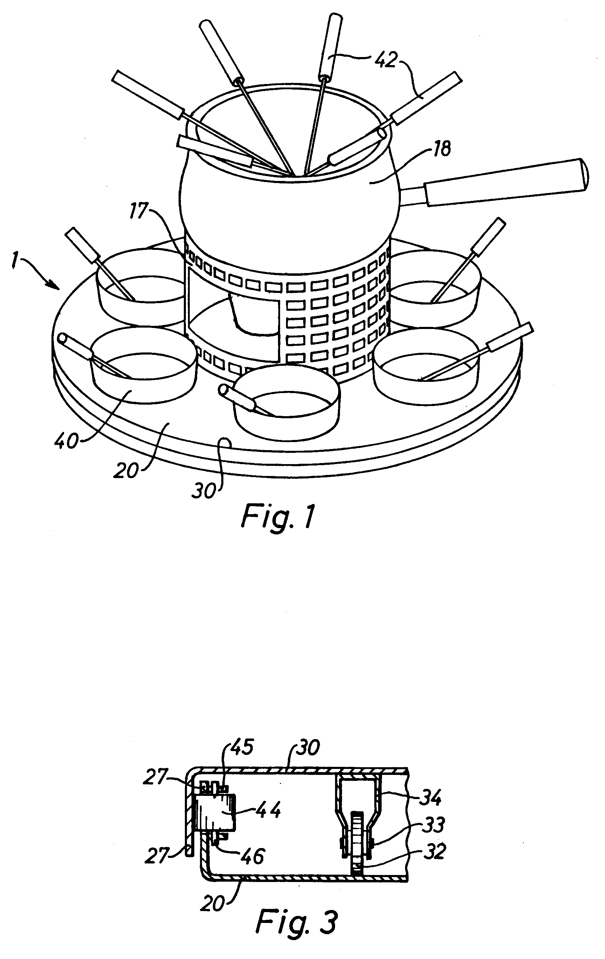

- Fig. 1: eine perspektivische Darstellung des Tischgerätes

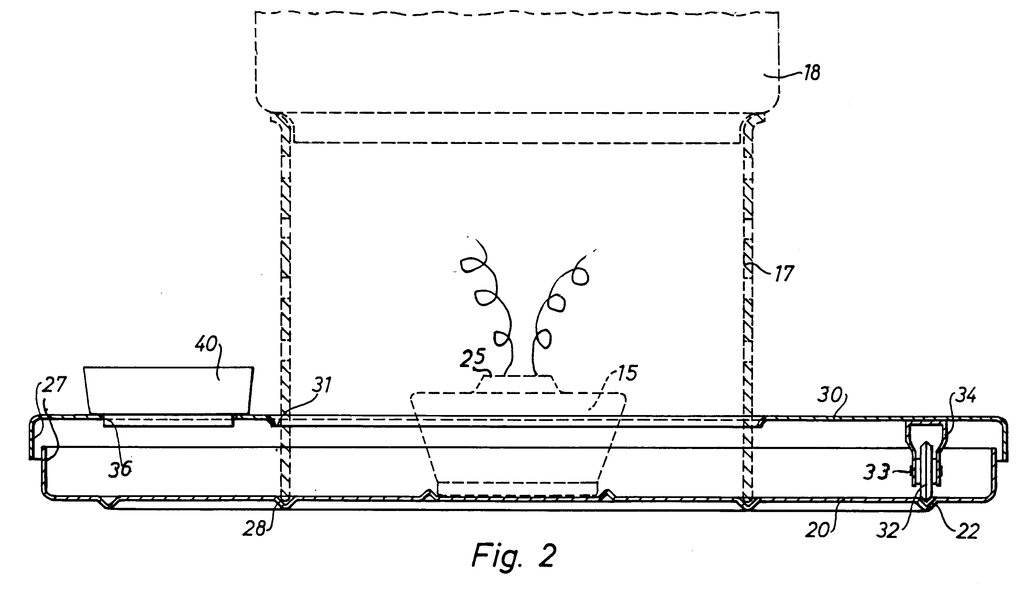

- Fig. 2: einen Vertikalschnitt durch das Tischgerät
- Fig. 3: einen vertikalen Teilschnitt durch eine Ausführungsvariante

Das auf einen Tisch od.dgl. aufstellbare Tischgerät 10 enthält eine runde Sockelscheibe 20 und eine sich koaxial darüber befindliche runde Drehscheibe 30. Die Drehscheibe 30 enthält auf ihrer Unterseite drei je um 120° versetzte, drehbare Rollen 32, die je an einem Halter 34 befestigt sind. Die Rollen 32 greifen in eine in die Sockelscheibe 20 eingeformte Laufrinne 22 ein, die vorzugsweise einen keilförmigen oder halbrunden Querschnitt hat.

Die Drehachse 33 dieser Rollen 32 verläuft radial zur Sockelscheibe 20. Die Sockelscheibe 20 und die Drehscheibe 30 haben zueinander einen vertikalen Abstand und liegen - durch die Rollen 32 und deren Halter 34 abgestützt - lose aufeinander. Dadurch lassen sich die beiden Scheiben 20, 30 beispielsweise zu Reinigungszwecken leicht voneinander trennen.

Die Drehscheibe 20 und die Sockelscheibe 30 enthalten je einen vorzugsweise rechtwinklig abgebogenen äusseren Rand 27, die sich berührungslos überlappen.

Die Drehscheibe 30 enthält eine zentrale Oeffnung 31 sowie eine Mehrzahl, vorzugsweise sechs gegenüber der zentralen Oeffnung kleinere Oeffnungen 36, die auf der Ringfläche kranzartig und gleichmässig verteilt angeordnet sind. Diese kreisrunden Oeffnungen 36 sind zur Aufnahme von Schalen 40 bestimmt, in welche unterschiedliche Lebens- oder Genussmittel, insbesondere Saucen, Gewürze od.dgl. eingefüllt werden und aus denen sich die Teilnehmer wahlweise bedienen können.

Im zentralen Bereich der Sockelscheibe 20 befindet sich ein Träger 17 zur Abstützung eines Kochtopfes 18, der üblicherweise mit Oel oder Fleischbrühe gefüllt ist. Der Träger 17 kann beispielsweise als gelochter, dünnwandiger Metallring ausgeführt werden oder mit mehreren, insbesondere drei Tragarmen versehen werden. Der Träger 17 sitzt unten entweder in einer Ringnut der Sockelscheibe 20 oder als Alternative könnte der mittlere Teil der Sockelscheibe 20 zur Aufnahme des Trägers vertieft sein.

Im Zentrum der Sockelscheibe 20 befindet sich ein handelsüblicher Brenner 15, der auch als Rechaud bezeichnet werden könnte. Dieser Brenner 15 arbeitet mit flüssigem oder pastenförmigem Brennstoff, beispielsweise auf Brennspritbasis. Der Brenner 15 könnte auch als Gasbrenner ausgeführt sein. Die aus der Brenneröffnung 25 austretende Flamme erhitzt die sich im Kochgefäss 18 befindliche Flüssigkeit.

Das Kochgefäss 18 kann so ausgebildet sein, dass es auf die Oberkante des Trägers 17 aufgesetzt wird oder dass es zu einem wesentlichen Teil in das Innere des Trägers 17 hineinragt.

Die beiden Scheiben 20, 30 lassen sich stanzen und im Tiefziehverfahren aus Blech besonders rationell fertigen. Diese Teile könnten indessen auch aus Kunststoff hergestellt werden.

An Stelle der Befestigung der Rollenhalter 34 an der Deckscheibe 30 könnten diese auch an der Sockelscheibe 20 festgemacht werden und die Laufrille an der Deckscheibe 30 vorgesehen werden.

An Stelle von Rollen 32 könnten auch Kugeln zur leichtgängigen Verdrehung der Drehscheibe 30 eingesetzt werden.

Bei der in Fig. 3 dargestellten Ausführungsvariante sind zur Zentrierung der Drehscheibe 30 an Stelle einer Laufrinne 22 zwischen den sich überlappenden, abgebogenen Aussenrändern 27 mindestens drei Zentrierrollen 44 vorhanden. Deren Achsen 46 greifen in Stützen 45 ein.

Die um das Tischgerät herumsitzenden Teilnehmer stecken Fleischstücke od.dgl. je auf eine Gabel 42, tauchen sie in die heisse Flüssigkeit im Innern des Kochtopfes ein, wodurch sie garen. Je nach Geschmack bedienen sich die Teilnehmer mit dem Inhalt der Schalen 40, wobei zur bequemen Zugänglichkeit die Drehscheibe 30 zu verdrehen ist.

## Patentansprüche

1. Tischgerät zur Halterung eines oberhalb eines Brenners (15) angeordneten Kochgeschirres (18) und einer Mehrzahl von Schalen (40) zur Aufnahme von Lebens- oder Genussmitteln, dadurch gekennzeichnet, dass eine erste Sockelscheibe zur zentralen Aufnahme des Brenners (15) und eines Trägers (17) zur Abstützung eines Kochgeschirrs (18) vorhanden ist, eine zweite, sich darüber befindliche Drehscheibe (30) mit einer zentralen Oeffnung (31) vorhanden ist, mit einer Mehrzahl kranzartig angeordneten Oeffnungen (39) zur Aufnahme der Schalen (40), die Drehscheibe (30) zur Sockelscheibe (20) einen vertikalen Abstand hat und relativ zu dieser verdrehbar ist, zwischen der Sockelscheibe (20) und der Drehscheibe (30) in einem radialen Abstand von der Drehachse mindestens drei Rollen (32) oder Kugeln vorhanden sind zur Abstützung und Zentrierung der Drehscheibe (30) relativ zur Sockelscheibe (20).

2. Tischgerät nach Anspruch 1, dadurch gekennzeichnet, dass die Zentrierung durch eine in einer der beiden Scheiben (20, 30) vorhandene, vom Drehzentrum radial distanzierte Laufrinne (22) erfolgt, in welche die Rollen (32) oder Kugeln eingreifen.

3. Tischgerät nach Anspruch 1 oder 2, dadurch gekennzeichnet, dass zwischen den beiden Scheiben (20, 30) umfangsverteilt mindestens drei Halter (34) für die Rollen (32) oder Kugeln vorhanden sind und die beiden Scheiben (20, 30) - durch die Rollen oder Kugeln abgestützt - lose aufeinander liegen und die Scheiben aussen abgewinkelte, sich überlappende Ränder (27) aufweisen.

4. Tischgerät nach Anspruch 2 oder 3, dadurch gekennzeichnet, dass die Halter (34) für die Rollen (32) oder Kugeln mit der Drehscheibe (30) verbunden sind und die Laufrinne (22) in die Sockelscheibe (20) eingeprägt ist.

5. Tischgerät nach Anspruch 1, dadurch gekennzeichnet, dass die Scheiben (20, 30) je abgewinkelte, sich überlappende Ränder (27) aufweisen, zwischen denen sich die Rollen (32) oder Kugeln befinden.

6. Tischgerät nach einem der Ansprüche 1 bis 5, dadurch gekennzeichnet, dass die Sockelscheibe (20) eine ringförmige Sicke (28) oder Vertiefung aufweist zur Aufnahme des Trägers (17) für ein Kochgeschirr (18) und die zentrale Oeffnung (31) der Drehscheibe (30) einen radialen Abstand vom Träger (17) hat.

7. Tischgerät nach einem der Ansprüche 1 bis 6, mit einem Brenner (15), mit einem Kochgeschirr (18) und mit einem das Kochgeschirr abstützenden Träger (17), dadurch gekennzeichnet, dass der Brenner (15) zum Betrieb mit flüssigem, gasförmigem oder pastösem Brennstoff dient, der Träger (17) als mit Druchbrüchen versehener Metallring ausgebildet ist und das Kochgeschirr (18) auf den Träger (17) aufgesetzt ist oder teilweise in diesen hineinragt.
